# EUROPEAN PATENT APPLICATION

(11) **EP 1 923 189 A1**
(43) Date of publication of application: **21.05.2008**
(21) Application number: 07380297.7
(22) Date of filing: 31.10.2007
(51) Int. Cl.: B29B 17/00, B29B 17/02

(54) **Process for the use of residue of plastic materials**

(30) Priority: 07.11.2006 ES 200602822
(71) Applicant: Riera Berenguer, Francisco, 08470 Sant Celoni (Barcelona) (ES)
(72) Inventor: Riera Berenguer, Francisco, 08470 Sant Celoni (Barcelona) (ES)
(74) Representative: Canadell-Isern, Roberto

(57) **Abstract**

**Process for the use of residue of compound plastic materials,** which in a coordinated fashion comprises the following phases: a first grinding phase, with a mill-like machine, a second grinding phase with a machine similar to the first; passing into the upper rotating drum (3); a first sifting (4); a second sifting (6); a homogenising phase (14) in its silo; a third sifting (15).

The invention is designed for the recovery of the remnants resulting from the processes of cutting and manipulating these materials, essentially made up of sheets synthetic plastic such as polyester and other synthetic plastic such as polyvinyl chloride (PVC), for its use in the manufacturing of various pieces.

## Description

### OBJECT OF THE INVENTION

This invention refers to a process for the use of the residue of compound plastic materials.

### FIELD OF THE INVENTION

It is the recovery of compound plastic materials through their residue (remnants), resulting from the processes of cutting and handling of these materials for the manufacturing of various pieces destined for different applications.

### BACKGROUND OF THE INVENTION

In the industry of manufacturing pieces of plastic materials, a considerable amount of residue is normally produced, made up of remnants that result from the cutting of pieces (sheets or strips) from those materials, which because of their size and shape normally do not have any use in other applications.

As a result of this, the elimination of said residual fragments by simple dumping in industrial bins represents the renunciation of the re-use of these materials and the consequent economic effect, and also a cause of environmental contamination, given the impossibility of biologic degradation of these materials.

### BRIEF DESCRIPTION OF THE INVENTION

It deals with transforming the remnants, of different sizes and shapes, of compound plastic materials into very small fragments whose process permits the separation of its components.

A compound plastic material, suitable for use through the process that will be described, is the one formed by the juxtaposition of one plastic sheet or thread, such as polyester, between two sheets or layers of another synthetic plastic, such as polyvinyl chloride (PVC), usually inseparable.

Through the new process one can obtain very small fragments (or in order of size) of polyester and fragments of the same size of PVC, separates and able to be reused because of their homogeneity in their respective new applications.

To facilitate the explanation, this description is accompanied by a diagram of the process, which shows as an example but not limited to carrying out of the new process for using compound plastic material residues, according to the claims.

### DETAILED DESCRIPTION OF THE INVENTION

The phases indicated with numbers in the diagram correspond to the following stages.
1, a first grinding phase, with a mill-like machine of the appropriate characteristics, of the remnants of the compound material in question, which are reduced to approximately 8 to 12 millimetres;
2, a second grinding phase, with a machine similar to the first, into fragments of approximately 1 to 5 mm;
3, passing them to the upper rotating drum, in order to get the polyester thread to convert into balls larger than the plastic fragments (PVC);
4, a sifting phase, with a reticulated sieve of mesh or perforated cloth, from which it is possible to obtain, from one of its outlets 5, fragments of the plastic materials of the chosen size, which along with part of the produced PVC sediment, pass on to the second sieve 6 and from this one to the chute 7;
8, second outlet of the first sieve 4, from which it is also possible to obtain plastic fragments and another part of the generated sediment material, which go into the lower drum 9. This is made of perforated sheet metal and expels the plastic (still with some of the thread) while it retains the sediment in its interior, which will outlet through the duct 10, into the sediment bin 11;
12, outlet of the sediment from the second sieve 6 into the sediment bin 11;
13, outlet of the plastic fragments, still mixed with a small percentage of sediment to be separated, from chute 7 to the homogeniser silo 14, where the uniformity of the fragments is verified by stirring them with blades or similar system. By the type of stirring used, the small percentage of remaining thread can be separated by aspiration, which outlets through the pipes 19 to the bin 11, and causes the formation of new balls of residue sediment;
15, third phase of selection with the sieve, whose entrance receives the material, almost all plastic and with only a scant amount of sediment, from the silo 14; the outlet 16 provides the resulting fragments, exclusively plastic, which will be put in sacks or another type of bin 17 for its commercial use, while the outlet 18 permits the sending of the remaining traces of sediment, practically insignificant quantitavely, to the bin 11.
   The quantities of sediment obtained in the outlet 8 of the sieve 4 are superior than those derived from the outlet 5, and these are larger than the ones derived from the outlet 20 of the sieve 6 and the chute 7, which are progressively reduced until they reach the outlet 18 of the sieve 15.

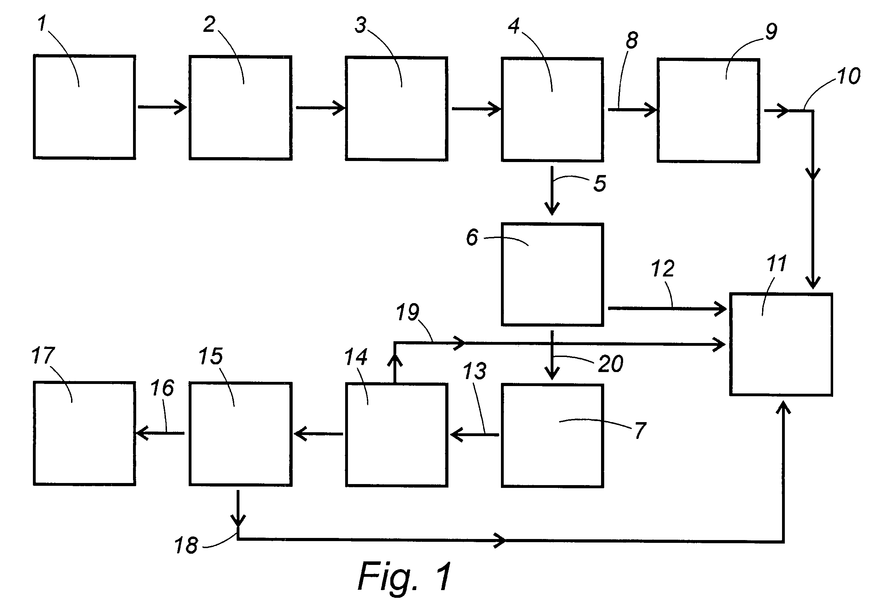

## Claims

1. Process for the use of compound plastic material residue, with the intention of recovering the remnants resulting from the processes of cutting and manipulating said materials, essentially made up of sheets of synthetic plastic such as polyester and other synthetic plastic such as polyvinyl chloride (PVC), for its use in the manufacturing of various pieces, **characterised by** comprising in a coordinated fashion the phases of:
a) a first grinding phase, with a mill-like machine, of the remnants of the compound material in question, reduced to fragments of the size of approximately 8 to 12 millimetres;
b) a second grinding phase, with a similar machine to the first, reducing into fragments of a size approximately 1 to 5 millimetres;
c) passing into the upper rotating drum (3) for the conversion of the polyester component into balls of a size larger than the fragments of the PVC component;
d) a first sifting (4) from which it is possible to obtain, through one of its outlets (8), a mixture of plastic and sediment that will go into the lower rotating drum (9) and from here into the general sediment bin (11), and through another outlet (5) a mixture with a lower proportion of sediment;
e) a second sifting (6) from which it is possible to obtain, through one of its outlets (12) part of the sediment taken (12) into the general bin (11), and through another outlet (20) the plastic and sediment, which go into a chute (7);
f) a homogenising phase (14) in a silo whose entrance is fed by the chute (7) and that provides an outlet to a uniform mixture of plastic and sediment and an outlet (19) for the remnants of thread for sending them to the general bin (11);
g) a third sifting (15) for the processing of the mixture coming from the homogenising silo (14) depending on the final attainment of the plastic component (16) and the separation of the residual sediment traces, carried by a pipe (18) to the general bin (11).
